# FASCICULE DE BREVET EUROPEEN

(11) **EP 1 603 787 B1**
(45) Date de publication et mention de la délivrance du brevet: **09.04.2008**
(21) Numéro de dépôt: 04720895.4
(22) Date de dépôt: 16.03.2004
(51) Int. Cl.: B62D 25/08, B60R 21/34

(54) **MODULE DE FACE AVANT DE VEHICULE AUTOMOBILE**
FRONTMODUL EINES FAHRZEUGS
FRONT PANEL MODULE FOR MOTOR VEHICLE

(30) Priorité: 17.03.2003 FR 0303244
(43) Date de publication de la demande: 14.12.2005
(73) Titulaire: VALEO SYSTEMES THERMIQUES, 78320 Le Mesnil Saint-Denis (FR)
(72) Inventeur: HARAND, Pascal, F-78190 Trappes (FR); LANARD, Jean-Louis, F-78310 Feucherolles (FR)
(86) Numéro de dépôt international: PCT/FR2004/000635
(87) Numéro de publication internationale: WO 2004/085230

(56) Documents cités:
- EP-A- 0 568 251
- EP-A- 0 658 470
- DE-A- 19 520 870
- DE-A- 19 853 340
- GB-A- 2 153 751
- US-A- 4 249 632
- US-A1- 2002 040 819
- US-B1- 6 416 119

## Description

L'invention concerne un module de face avant de véhicule automobile, du type comprenant une partie sensiblement verticale formée d'éléments allongés constituant une armature.

Un module de face avant comprend un élément de structure apte à supporter divers équipements du véhicule, tels que projecteurs, clignotants, avertisseur sonore, échangeur thermique, groupe moto-ventilateur, module de refroidissement complet ou poutre pare-chocs, etc.

Le document US2002/0040819 A1 décrit un module de face avant de véhicule automobile, comprenant des éléments d'équipements et une première partie sensiblement verticale, formée d'éléments allongés constituant une armature, la première partie se raccordant à une deuxième partie sensiblement horizontale qui s'étend vers l'arrière dans la direction du tablier du véhicule, lesdites première et deuxième parties supportant lesdites équipements du véhicule pour constituer un module unitaire préparé et livré, prêt à être monté sur ledit véhicule.

Le module, ainsi pourvu de ses équipements, constitue un module unitaire préparé et livré par l'équipementier, prêt à être monté sur le véhicule par le constructeur. Le montage de ce module unitaire se fait par raccordement à des éléments de structures notamment latéraux du véhicule, tels que longerons, ailes ou coque, puis mise en place éventuelle d'équipement supplémentaires tel qu'un pare-chocs ou bouclier frontal rapporté sur le module.

Un tel module permet de réorganiser les chaînes de montage de véhicules, les éléments qu'il intègre n'étant plus montés les uns après les autres sur la chaîne principale mais pré-assemblés en dehors de celle-ci. Il présente en outre l'avantage de pouvoir être démonté du véhicule, par exemple pour être changé ou réparé.

Un tel module est habituellement réalisé sous la forme d'un élément monobloc, en particulier sous la forme d'un élément composite métal/plastique, comme enseigné par la publication EP-A-0 658 470. Cette publication décrit en effet une face avant réalisée sous la forme d'une armature métallique en tôle emboutie, sur laquelle est surmoulée une matière plastique, en particulier du type polyamide.

Les modules de face avant connus présentent habituellement une disposition généralement verticale. Ils comprennent le plus souvent deux jambages sensiblement verticaux réunis par une poutre pare-chocs. Généralement, les deux jambages sont en outre réunis, en partie inférieure, par une poutre inférieure et, en partie supérieure, par une poutre supérieure. Cette poutre supérieure sert habituellement à la fixation d'une serrure pour le maintien du capot moteur. Egalement, dans ces modules connus, les deux jambages et la poutre supérieure contribuent à définir des logements pour des projecteurs du véhicule.

Cette conception de module de face avant convient aux véhicules d'architecture traditionnelle, pour lesquels le capot est très horizontal et bien détaché du pare-brise.

Or, la tendance actuelle montre une forte évolution du style de la partie avant des véhicules qui fait que la zone, qui est située devant le tablier séparant le compartiment de moteur à l'habitacle, est de plus en plus compacte.

En conséquence, la base du pare-brise, encore appelée "pied de pare-brise" a tendance à avancer pour se situer pratiquement à l'aplomb de l'axe des roues avant.

L'invention vise en conséquence à procurer un module de face avant du type défini précédemment qui est susceptible de s'adapter à la conception actuelle des véhicules automobiles, dans laquelle la partie antérieure est beaucoup plus compacte, et dans laquelle l'angle formé entre le capot et le pare-brise est plus faible que dans le cas des véhicules traditionnels.

Cet objet est réalisé par un module de face selon la revendication 1.

L'invention propose à cet effet un module de face avant du type comprenant des éléments d'équipement et une première partie sensiblement verticale formée d'éléments allongés constituant une armature.

Conformément à l'invention, la première partie se raccorde à une deuxième partie sensiblement horizontale qui s'étend vers l'arrière jusqu'au tablier du véhicule, les première et deuxième parties supportant lesdites équipements du véhicule pour constituer un module unitaire préparé et livré, prêt a être monté sur le véhicule.

Ainsi, contrairement aux modules traditionnels qui se composent d'une partie sensiblement verticale fixée à la structure du véhicule, le module de face avant de l'invention se compose de deux parties, une partie sensiblement verticale et une partie sensiblement horizontale. La partie sensiblement horizontale s'étend jusqu'au tablier et elle support également un ou plusieurs équipements du véhicule tel qu'un module de chauffage et/ou de climatisation, un module d'essuyage ou un module de cockpit, etc. Jusqu'à présent, ces équipements ne faisaient pas partie du module de face avant et étaient supportés par la structure même du véhicule.

Dans une forme de réalisation préférée de l'invention, la deuxième partie est, elle aussi, composée d'éléments allongés constituant une armature.

Avantageusement, la deuxième partie comprend deux éléments latéraux sensiblement parallèles s'étendant de la première partie vers l'arrière en direction du tablier du véhicule.

De façon avantageuse, la première partie comprend une extrémité supérieure droite et une extrémité supérieure gauche, tandis que les éléments latéraux de la deuxième partie sont issus des extrémités supérieurs droite et gauche.

Il est avantageux que la deuxième partie comprenne un élément transversal s'étendant entre les éléments latéraux de cette deuxième partie, au voisinage de leur extrémité opposée à la première partie. Cet élément transversal contribue notamment au renforcement de la structure du module de face avant. Il peut contribuer en outre à la fixation d'un ou de plusieurs équipements.

Selon une autre caractéristique de l'invention, la deuxième partie comprend des moyens de fixation à la structure du véhicule. A cet égard, il est avantageux que les extrémités des éléments latéraux de la deuxième partie, opposées à la première partie, soient agencées pour être fixées à la structure du véhicule dans la région du tablier et/ou sur le tablier du véhicule.

Dans une première forme de réalisation de l'invention, la première partie et la deuxième partie sont réalisées sous la forme d'un composant modulaire unique.

Dans une autre forme de réalisation de l'invention, la première partie et la deuxième partie sont réalisées sous la forme de deux composants modulaires séparés, agencés pour être assemblés mutuellement. Ceci permet notamment de diminuer l'encombrement global du module pour le stockage et la manutention.

Selon une autre caractéristique de l'invention, la deuxième partie peut recevoir un équipement dit "de pied de pare-brise", c'est-à-dire un équipement qui, jusqu'à présent, ne faisait pas partie du module de face avant et était supporté par la structure même du véhicule.

Cet équipement de pied de pare-brise est avantageusement constitué par un module d'essuyage, mais il peut s'agir aussi d'un autre équipement, en particulier d'un module de chauffage et/ou de climatisation.

L'équipement de pied de pare-brise est avantageusement prévu au niveau d'un élément transversal de la deuxième partie.

La deuxième partie peut recevoir en outre un module de cockpit agencé pour être disposé dans une région centrale près du tablier du véhicule.

La première partie peut recevoir au moins un composant souple, en particulier un réservoir, dans une région supérieure pour former un élément d'absorption en cas de choc avec un piéton.

Selon encore une autre particularité de l'invention, la deuxième partie peut recevoir des équipements d'optique, en particulier des projecteurs. Ceci permet d'intégrer des projecteurs de forme complexe, tels que montés dans les véhicules actuels.

Ces projecteurs sont avantageusement prévus au niveau d'éléments latéraux de cette deuxième partie.

Les projecteurs comportent chacun un boîtier avantageusement intégré au moins en partie à un élément latéral.

Du fait de sa conception particulière, le module de face avant de l'invention peut intégrer différents types d'équipements.

La première partie peut supporter en outre au moins un échangeur de chaleur disposé au moins en partie en dessous du composant souple.

En outre, il est possible de prévoir au moins un conduit d'évacuation d'air s'étendant au moins en partie le long d'un élément latéral de la deuxième partie.

Au moins une poutre reliant les éléments allongés peut également être prévue.

La première et la deuxième partie du module de face avant de l'invention sont de préférence réalisées en matière plastique, ou en matière hybride métal/plastique.

Dans la description qui suit, faite à titre d'exemple, on se réfère aux dessins annexés, sur lesquels :
- la figure 1 est une vue en perspective d'un véhicule automobile de conception actuelle susceptible d'intégrer un module de face avant selon l'invention ;
- la figure 2 est une vue en perspective d'un module de face avant selon l'invention, réalisé sous la forme d'un composant unique et dépourvu de ses équipements ;
- la figure 3 est une vue en perspective analogue à la figure 2 montrant le module de face avant avec ses équipements ;
- la figure 4 est une vue en perspective d'un module de face avant composé de deux sous-modules, s'apparentant au module de la figure 3 ; et
- la figure 5 est une vue analogue à la figure 2 dans une variante de réalisation.

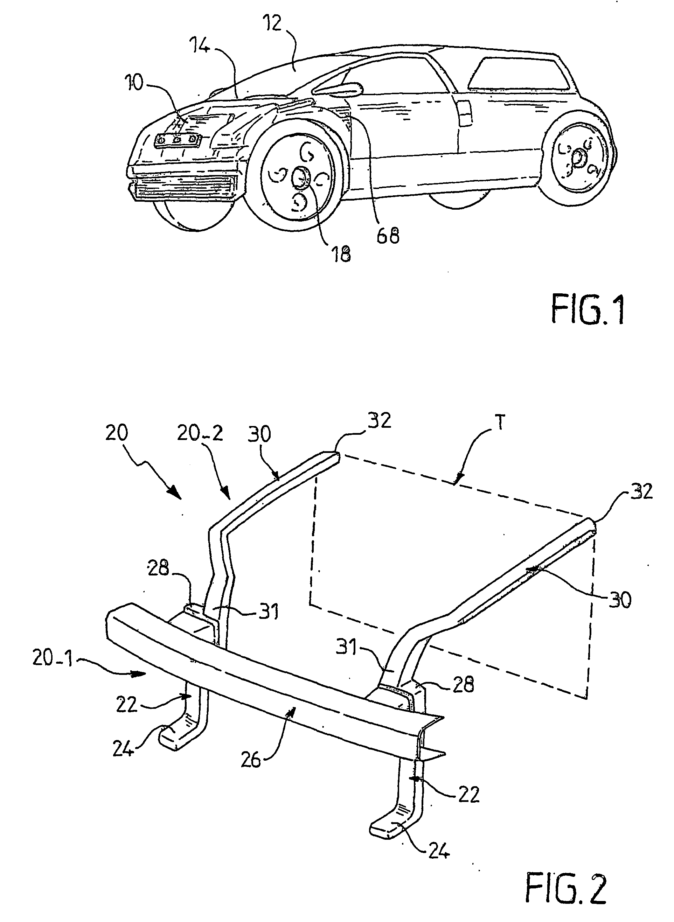

On se réfère d'abord à la figure 1 qui montre un véhicule automobile imaginaire, de conception actuelle, dont la partie avant est particulièrement compacte. On voit que le capot moteur 10 et que le pare-brise 12 sont très inclinés, l'angle formé entre le capot-moteur et le pare-brise étant très faible. Par ailleurs, la base 14 du pare-brise, encore appelée "pied de pare-brise" se situe pratiquement à l'aplomb de l'essieu 18 des roues avant du véhicule.

On se réfère maintenant à la figure 2 pour décrire un module de face avant susceptible de faire partie du véhicule de la figure 1. Le module, désigné dans son ensemble par la référence 20, est réalisé sous la forme d'un composant modulaire unique formé d'éléments allongés constituant une armature. Le module 20 se compose d'une première partie 20-1 sensiblement verticale qui se raccorde à une deuxième partie 20-2 sensiblement horizontale.

La première partie 20-1 comprend deux jambages 22 sensiblement verticaux et espacés l'un de l'autre qui constituent deux montants du module. Ces deux jambages ont des extrémités inférieures coudées 24 qui, en variante, pourraient être supprimées. Les deux jambages 22, sont réunis entre eux par une poutre pare-chocs 26 réalisée sous la forme d'un profilé à section transversale en forme générale de U. De plus, la partie 20-1 comprend une extrémité supérieure droite 28 et une extrémité supérieure gauche 28, qui sont constituées par les extrémités supérieures respectives des jambages 22.

La deuxième partie 20-2 sensiblement horizontale comprend deux éléments latéraux 30 sensiblement parallèles qui s'étendent de la première partie 20-1 vers l'arrière en direction du tablier du véhicule. Le tablier, désigné par la référence T est représenté schématiquement sur la figure 2. On rappellera que le tablier constitue une cloison transversale qui sépare le compartiment moteur de l'habitacle du véhicule.

Les éléments latéraux 30 peuvent constituer notamment des renforts d'ailes. Ils sont réalisés sous la forme de poutres ou profilés qui sont espacés l'un de l'autre, sensiblement en relation de parallélisme, et qui sont dirigés inclinés de façon ascendante, mais avec un faible angle d'inclinaison par rapport à l'horizontale. Ces deux éléments latéraux 30 sont issus des extrémités supérieures gauche et droite 28 de la première partie.

Les éléments latéraux 30 ont des extrémités 31 qui sont issues respectivement des extrémités supérieures 28 des jambages 22. Ainsi chaque élément latéral 30 est, dans l'exemple, réalisé monobloc avec le jambage 30 dont il est issu. En outre, ils ont des extrémités de fixation 32 agencées pour être fixées à la structure du véhicule dans la région du tablier. Ces extrémités 32 peuvent ainsi être fixées à des longerons supérieurs (non représentés) faisant partie de la structure du véhicule et qui s'étendent jusqu'à la région du pied de pare-brise. La deuxième partie 20-2 s'étend ainsi d'un coin droit à un coin gauche du véhicule sur une partie substantielle de la largeur du véhicule.

Dans la forme de réalisation de la figure 2, les deux éléments latéraux 30 ne sont pas reliés entre eux. Dans une variante (représentée plus loin), les éléments latéraux 30 peuvent être réunis entre eux par au moins un élément transversal, en offrant une structure de renfort entre les deux éléments latéraux.

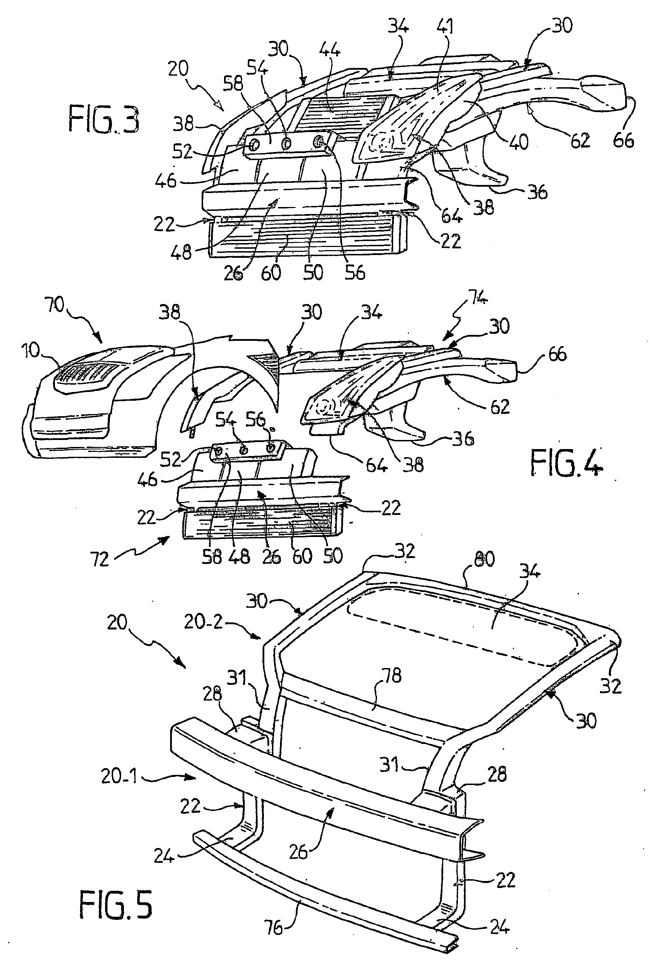

On se réfère maintenant à la figure 3 qui montre le même module de face avant 20 avec ses différents équipements. Entre les deux éléments latéraux 30 et dans la région des extrémités de fixation 32 de ces derniers, est prévu un équipement 34 dit "de pied de pare-brise", puisque cet équipement est logé dans la région du pied de pare-brise.

Dans l'exemple, l'équipement 34 est un module d'essuyage, c'est à dire un module qui incorpore des moyens de commande et d'entraînement d'un ou plusieurs balais d'essuie-glace (non représentés). Ce module, dont seul le boîtier est représenté, loge un ou plusieurs moteurs électriques et des commandes associées.

Il pourrait être possible de loger un autre équipement de pied de pare-brise à proximité de l'équipement 34 précité, par exemple, en avant de celui-ci. Cet équipement supplémentaire pourrait constituer, par exemple, un module de chauffage et/ou de climatisation ou bien une partie d'un tel module.

Le module de face avant 20 incorpore en outre un module de cockpit 36 agencé pour être disposé dans une position centrale et généralement verticale entre les deux élément latéraux 30. Ce module de cockpit se situe dans une région centrale près du tablier (non représenté sur la figure 3) qui sépare le compartiment moteur de l'habitacle du véhicule automobile. Ce module de cockpit est réalisé sous la forme d'un boîtier qui loge différents équipements, tels que par exemple des organes de commande de chauffage et/ou de climatisation, etc.

Le module de face avant 20 incorpore en outre deux éléments d'optique, ici deux projecteurs 38, qui sont reçus par la deuxième partie 20-2 au niveau des éléments latéraux 30 de cette dernière. Dans l'exemple représenté, chacun des projecteurs est agencé dans une région de raccordement d'un jambage 22 et d'un élément latéral 30. Chacun des projecteurs peut être rapporté dans la région de raccordement du jambage et de l'élément latéral correspondant, ou bien être intégré, au moins en partie à cette région de raccordement. Il est possible ainsi de prévoir que le projecteur 38 comporte un boîtier 40 intégré au jambage et à l'élément latéral, et une glace 42 venant se fixer sur le boîtier 40. Le boîtier 40 peut en variante être intégré directement à un élément latéral 30. Par intégré, il faut entendre ici réalisé monobloc ou d'un seul tenant.

Le module 20 incorpore en outre un échangeur de chaleur 44 disposé entre les deux éléments latéraux 30 et en avant de l'équipement de pieds de pare-brise 34. Dans l'exemple, cet échangeur de chaleur est disposé incliné. Il peut s'agir par exemple du radiateur de refroidissement du moteur, ou encore d'un autre type d'échangeur, par exemple un condenseur d'une installation de climatisation.

Entre les deux jambages 22 de la première partie 20-1, sont disposés trois réservoirs 46, 48 et 50 et leurs organes de remplissage associés 52, 54 et 56. Ces trois réservoirs sont disposés au moins en partie au dessus de la poutre pare-choc et ils sont surmontés par leurs organes de remplissage respectifs. Ces derniers sont regroupés dans un élément 58. Ces réservoirs peuvent constituer par exemple un réservoir de lave-glace, un réservoir de liquide de frein, etc. Ils constituent des composants souples placés dans une région supérieure de la première partie 20-1 pour former des éléments d'absorption en cas de choc avec un piéton.

Le module comprend en outre un autre échangeur de chaleur 60 disposé entre les deux jambages 22, au moins en partie au dessous de la poutre pare-chocs 26. Cet échangeur de chaleur est également disposé au moins en partie en dessous des composants souples précités. L'échangeur de chaleur 60 présente une forme oblongue et s'étend sur une largeur horizontale importante qui correspond sensiblement à celle de la poutre pare-chocs.

Cet échangeur de chaleur peut être réalisé notamment sous la forme d'un radiateur de refroidissement du moteur du véhicule. Son implantation en partie basse du module 20, et donc du véhicule, favorise un bon refroidissement du fluide qui le traverse.

Enfin, dans l'exemple de réalisation représenté, le module 20 intègre un autre équipement, à savoir un conduit d'évacuation d'air 62 qui s'étend au moins en partie le long d'un élément transversal 30, ici celui situé du côté gauche. Ce conduit d'évacuation possède une extrémité antérieure 64 située vers l'avant et une extrémité postérieure 66 débouchant latéralement au niveau d'une grille 68 que l'on voit sur la figure 1.

Les différents éléments de la première partie 20-1 et de la deuxième partie 20-2 peuvent être réalisés, selon le cas, soit en matière plastique, soit en métal, soit en matière composite métal/plastique. En particulier, les jambages 22 sont de préférence réalisés en matière plastique et les éléments latéraux 30 en matière hybride métal/plastique.

On se réfère maintenant à la figure 4 qui s'apparente à celle de la figure 3, la différence principale étant que le module 70 est formé ici de deux sous-modules, à savoir un sous-module inférieur 72 et un sous-module supérieur 74 qui correspondent respectivement aux parties 20-1 et 20-2 précitées. Le sous-module inférieur 72 comprend une partie au moins des jambages 22 et la poutre pare-chocs 26. Dans l'exemple, ce sous-module incorpore aussi les réservoirs 46, 48, 50 et leurs organes de remplissage associés 52, 54 et 56, ainsi que l'échangeur de chaleur 60. Le sous-module supérieur 72 comprend les deux éléments latéraux 30, une partie au moins des jambages 22 et le module 34 de pied de pare-brise. Il incorpore aussi l'échangeur de chaleur 42. On distingue également sur la figure 4 le capot 10 du véhicule qui peut s'adapter aussi bien au module 20 en une seule partie des figures 2 et 3 qu'au module 70 en deux parties de la figure 4.

Le module 20 représenté sur la figure 5 s'apparente à celui de la figure 2 et les éléments communs sont désignés par les mêmes références numériques. Il comprend trois éléments allongés ou poutres supplémentaires. Une poutre 76, dite "poutre-piéton", relie les extrémités inférieures 24 des jambages 22. Une traverse supérieure 78 relie les régions de raccordement des jambages 22 et des éléments latéraux 30. Un élément transversal 80, dit "traverse tablier", s'étend entre les éléments latéraux 30 au voisinage de leurs extrémités 32, c'est à dire dans la région du tablier ou du pied de pare-brise.

Par ailleurs, un élément de pied de pare-brise 34 (représenté schématiquement sur la figure 5) peut être prévu au niveau de l'élément transversal 80.

L'invention permet ainsi de procurer un module de face avant adapté à la conception actuelle des véhicules automobiles et incorporant davantage d'équipements, simplifiant ainsi les opérations de première monte sur les chaînes de fabrication, et les opérations de deuxième monte pour la maintenance et la réparation.

## Revendications

1. - Module de face avant de véhicule automobile, comprenant des éléments d'équipements et une première partie (20-1) sensiblement verticale, formée d'éléments allongés (22) constituant une armature,
la première partie (20-1) se raccordant à une deuxième partie (20-2) sensiblement horizontale, apte à s'étendre vers l'arrière jusqu'au tablier (T) du véhicule, lesdites première et deuxième parties (20-2) supportant lesdits éléments équipements (60, 44, 58, 34, 36, 76, 26, 78, 38, 62) du véhicule pour constituer un module unitaire, préparé et livré, prêt à être monté sur ledit véhicule.

2. - Module de face avant selon la revendication 1, **caractérisé en ce que** la deuxième partie (20-2) est, elle aussi, composée d'éléments allongés (30) constituant une armature.

3. - Module de face avant selon la revendication 2, **caractérisé en ce que** la deuxième partie (20-2) comprend deux éléments latéraux (30) sensiblement parallèles s'étendant de la première partie (20-1) vers l'arrière en direction du tablier (T) du véhicule.

4. - Module de face avant selon la revendication 3, **caractérisé en ce que** la première partie (20-1) comprend une extrémité supérieure droite (28) et une extrémité supérieure gauche (28), et **en ce que** les éléments latéraux (30) de la deuxième partie (20-2) sont issus des extrémités supérieures droite et gauche (28) de la première partie (20-1).

5. - Module de face avant selon l'une des revendications 3 et 4, **caractérisé en ce que** la deuxième partie (20-2) comprend un élément transversal (80) s'étendant entre les éléments latéraux (30) de cette deuxième partie, au voisinage de leur extrémité opposée à la première partie (20-1).

6. - Module de face avant selon l'une des revendications 1 à 5, **caractérisé en ce que** la deuxième partie (20-2) comprend des moyens de fixation (32) à la structure du véhicule.

7. - Module de face avant selon la revendication 6, **caractérisé en ce que** les extrémités (32) des éléments latéraux (30) de la deuxième partie (20-2), opposées à la première partie (20-1), sont agencées pour être fixées à la structure du véhicule dans la région du tablier (T) et/ou sur le tablier (T) du véhicule.

8. - Module de face avant selon l'une des revendications 1 à 7, **caractérisé en ce que** la première partie (20-1) et la deuxième partie (20-2) sont réalisées sous la forme d'un composant modulaire unique.

9. - Module de face avant selon l'une des revendications 1 à 7, **caractérisé en ce que** la première partie (20-1) et la deuxième partie (20-2) sont réalisées sous la forme de deux composants modulaires séparés (72, 74), agencés pour être assemblés mutuellement.

10. - Module de face avant selon l'une des revendications 1 à 9, **caractérisé en ce que** la deuxième partie (20-2) peut recevoir un équipement (34) dit "de pied de pare-brise".

11. - Module de face avant selon la revendication 10, **caractérisé en ce que** l'équipement de pied de pare-brise (34) est un module d'essuyage.

12. - Module de face avant selon la revendication 10, **caractérisé en ce que** l'équipement de pied de pare-brise (34) est prévu au niveau d'un élément transversal (80) de la deuxième partie (20-2) .

13. - Module de face avant selon la revendication 10, **caractérisé en ce que** l'équipement de pied de pare-brise est un module de chauffage et/ou de climatisation.

14. - Module de face avant selon l'une des revendications 1 à 13, **caractérisé en ce que** la deuxième partie (20-2) peut recevoir en outre un module de cockpit (36) agencé pour être disposé dans une région centrale près du tablier (T) du véhicule.

15. - Module de face avant selon l'une des revendications 1 à 14, **caractérisé en ce que** la première partie (20-1) peut recevoir au moins un composant souple, en particulier un réservoir (46, 48, 50), dans une région supérieure pour former un élément d'absorption en cas de choc avec un piéton.

16. - Module de face avant selon l'une des revendications 1 à 15, **caractérisé en ce que** la deuxième partie (20-2) peut recevoir des équipements d'optique en particulier des projecteurs (38).

17. - Module de face avant selon la revendication 16, **caractérisé en ce que** lesdits projecteurs (38) sont prévus au niveau d'éléments latéraux (30) de la deuxième partie (20-2).

18. - Module de face avant selon la revendication 16 ou 17, **caractérisé en ce que** lesdits projecteurs (38) comportent chacun un boîtier (40) intégré au moins en partie à un élément latéral (30).

19. - Module de face avant selon l'une des revendications 1 à 18, **caractérisé en ce qu'**il comprend en outre au moins un conduit d'évacuation d'air (62) s'étendant au moins en partie le long d'un élément latéral (30) de la deuxième partie (20-2).

20. - Module de face avant selon l'une des revendications 1 à 19, **caractérisé en ce qu'**il comprend en outre au moins une poutre (76, 26, 78) reliant les éléments allongés (22).

21. - Module de face avant selon l'une des revendications 1 à 20, **caractérisé en ce que** la première partie (20-1) et/ou la deuxième partie (20-2) sont en matière plastique ou en matière hybride métal/plastique.

## Claims

1. Front panel module for a motor vehicle, comprising equipment elements and a generally vertical first portion (20-1), composed of elongated elements (22) constituting a frame, the first portion (20-1) being attached to a generally horizontal second portion (20-2), which can extend towards the rear as far as the bulkhead (T) of the vehicle, the said first and second portions (20-2) supporting the said equipment elements (60, 44, 58, 34, 36, 76, 26, 78, 38, 62) of the vehicle to constitute a single module, prepared and supplied, ready to be fitted to the said vehicle.

2. Front panel module according to Claim 1, **characterized in that** the second portion (20-2) is also composed of elongated elements (30) constituting a frame.

3. Front panel module according to Claim 2, **characterized in that** the second portion (20-2) comprises two generally parallel side elements (30) extending from the first portion (20-1) towards the rear in the direction of the bulkhead (T) of the vehicle.

4. Front panel module according to Claim 3, **characterized in that** the first portion (20-1) comprises a right-hand upper end (28) and a left-hand upper end (28), and **in that** the side elements (30) of the second portion (20-2) issue from the right-hand and left-hand upper ends (28) of the first portion (20-1).

5. Front panel module according to either of Claims 3 and 4, **characterized in that** the second portion (20-2) comprises a transverse element (80) extending between the side elements (30) of this second portion, in the vicinity of their ends which are away from the first portion (20-1).

6. Front panel module according to one of Claims 1 to 5, **characterized in that** the second portion (20-2) comprises means of fastening (32) to the structure of the vehicle.

7. Front panel module according to Claim 6, **characterized in that** the ends (32) of the side elements (30) of the second portion (20-2), which are away from the first portion (20-1), are arranged to be fastened to the structure of the vehicle in the area of the bulkhead (T) and/or to the bulkhead (T) of the vehicle.

8. Front panel module according to one of Claims 1 to 7, **characterized in that** the first portion (20-1) and the second portion (20-2) are made in the form of a single modular component.

9. Front panel module according to one of Claims 1 to 7, **characterized in that** the first portion (20-1) and the second portion (20-2) are made in the form of two separate modular components (72, 74), arranged to be assembled together.

10. Front panel module according to one of Claims 1 to 9, **characterized in that** the second portion (20-2) can receive a piece of equipment (34) called "base of windscreen" equipment.

11. Front panel module according to Claim 10, **characterized in that** the base of windscreen equipment (34) is a wiper module.

12. Front panel module according to Claim 10, **characterized in that** the base of windscreen equipment (34) is provided near a transverse element (80) of the second portion (20-2).

13. Front panel module according to Claim 10, **characterized in that** the base of windscreen equipment is a heating and/or air conditioning module.

14. Front panel module according to one of Claims 1 to 13, **characterized in that** the second portion (20-2) can also receive a driver's module (36) arranged to be disposed in a central area near the bulkhead (T) of the vehicle.

15. Front panel module according to one of Claims 1 to 14, **characterized in that** the first portion (20-1) can receive at least one flexible component, in particular a reservoir (46, 48, 50), in an upper area to form an element which will absorb an impact with a pedestrian.

16. Front panel module according to one of Claims 1 to 15, **characterized in that** the second portion (20-2) can receive lighting equipment, in particular headlights (38) .

17. Front panel module according to Claim 16, **characterized in that** the said headlights (38) are provided near side elements (30) of the second portion (20-2).

18. Front panel module according to Claim 16 or 17, **characterized in that** the said headlights (38) each include a unit (40) at least partly incorporated in a side element (30).

19. Front panel module according to one of Claims 1 to 18, **characterized in that** it also comprises at least one duct for removal of air (62) extending at least partly along a side element (30) of the second portion (20-2).

20. Front panel module according to one of Claims 1 to 19, **characterized in that** it also comprises at least one beam (76, 26, 78) connecting the elongated elements (22).

21. Front panel module according to one of Claims 1 to 20, **characterized in that** the first portion (20-1) and/or the second portion (20-2) are/is made of plastic or metal/plastic composite material.

## Patentansprüche

1. Modul einer Vorderseite eines Kraftfahrzeuges, umfassend Ausstattungselemente und einen im Wesentlichen senkrechten ersten Teil (20-1), bestehend aus länglichen Elementen (22), die eine tragende Struktur bilden,
wobei der erste Teil (20-1) sich an einen im Wesentlichen waagerechten zweiten Teil (20-2) anschließt, der sich nach hinten bis zur Spritzwand (T) des Fahrzeuges erstrecken kann, wobei der erste und der zweite Teil (20-2) die Ausstattungselemente (60, 44, 58, 34, 36, 76, 26, 78, 38, 62) des Fahrzeuges tragen und eine vorgefertigte und einbaufertig gelieferte Moduleinheit zur Montage in das Fahrzeug bilden.

2. Vorderseitenmodul nach Anspruch 1, **dadurch gekennzeichnet, dass** der zweite Teil (20-2) ebenfalls aus länglichen Elementen (30) besteht, die eine tragende Struktur bilden.

3. Vorderseitenmodul nach Anspruch 2, **dadurch gekennzeichnet, dass** der zweite Teil (20-2) zwei im Wesentlichen parallele seitliche Elemente (30) umfasst, die sich vom ersten Teil (20-1) nach hinten in Richtung Spritzwand (T) des Fahrzeuges erstrecken.

4. Vorderseitenmodul nach Anspruch 3, **dadurch gekennzeichnet, dass** der erste Teil (20-1) ein rechtes oberes Ende (28) und ein linkes oberes Ende (28) umfasst, und dass die seitlichen Elemente (30) des zweiten Teils (20-2) aus dem rechten und linken oberen Ende (28) des ersten Teils (20-1) hervorgehen.

5. Vorderseitenmodul nach einem der Ansprüche 3 und 4, **dadurch gekennzeichnet, dass** der zweite Teil (20-2) ein quer verlaufendes Element (80) umfasst, das sich zwischen den seitlichen Elementen (30) dieses zweiten Teils, in der Nachbarschaft ihres dem ersten Teil (20-1) gegenüberliegenden Endes erstreckt.

6. Vorderseitenmodul nach einem der Ansprüche 1 bis 5, **dadurch gekennzeichnet, dass** der zweite Teil (20-2) Befestigungsmittel (32) zur Befestigung an das Fahrzeuggestell umfasst.

7. Vorderseitenmodul nach Anspruch 6, **dadurch gekennzeichnet, dass** die Enden (32) der dem ersten Teil (20-1) gegenüberliegenden seitlichen Elemente (30) des zweiten Teils (20-2) derart ausgestaltet sind, dass sie an das Fahrzeuggestell im Bereich der Spritzwand (T) und/oder an der Spritzwand (T) des Fahrzeuges befestigbar sind.

8. Vorderseitenmodul nach einem der Ansprüche 1 bis 7, **dadurch gekennzeichnet, dass** der erste Teil (20-1) und der zweite Teil (20-2) als ein einziges Modulbauteil hergestellt sind.

9. Vorderseitenmodul nach einem der Ansprüche 1 bis 7, **dadurch gekennzeichnet, dass** der erste Teil (20-1) und der zweite Teil (20-2) als zwei getrennte, zusammenfügbare Modulbauteile (72, 74) hergestellt sind.

10. Vorderseitenmodul nach einem der Ansprüche 1 bis 9, **dadurch gekennzeichnet, dass** der zweite Teil (20-2) eine Ausstattung (34) aufnehmen kann, die als "Basis der Windschutzscheibe" bezeichnet wird.

11. Vorderseitenmodul nach Anspruch 10, **dadurch gekennzeichnet, dass** die Ausstattung Basis der Windschutzscheibe (34) ein Wischermodul ist.

12. Vorderseitenmodul nach Anspruch 10, **dadurch gekennzeichnet, dass** die Ausstattung Basis der Windschutzscheibe (34) im Bereich eines quer verlaufenden Elements (80) des zweiten Teils (20-2) vorgesehen ist.

13. Vorderseitenmodul nach Anspruch 10, **dadurch gekennzeichnet, dass** die Ausstattung Basis der Windschutzscheibe ein Heizungs- und/oder Klimaanlagenmodul ist.

14. Vorderseitenmodul nach einem der Ansprüche 1 bis 13, **dadurch gekennzeichnet, dass** der zweite Teil (20-2) zudem ein Fahrgastzellenmodul (36) aufnehmen kann, welches in einem mittleren Bereich in der Nähe der Spritzwand (T) des Fahrzeugs anordenbar ist.

15. Vorderseitenmodul nach einem der Ansprüche 1 bis 14, **dadurch gekennzeichnet, dass** der erste Teil (20-1) in einem oberen Bereich mindestens ein flexibles Bauteil, insbesondere einen Behälter (46, 48, 50), aufnehmen kann, um bei einem Zusammenprall mit einem Fußgänger ein Stoßfängerelement zu bilden.

16. Vorderseitenmodul nach einem der Ansprüche 1 bis 15, **dadurch gekennzeichnet, dass** der zweite Teil (20-2) optische Ausstattungen, insbesondere Scheinwerfer (38), aufnehmen kann.

17. Vorderseitenmodul nach Anspruch 16, **dadurch gekennzeichnet, dass** die Schweinwerfer (38) im Bereich von seitlichen Elementen (30) des zweiten Teils (20-2) vorgesehen sind.

18. Vorderseitenmodul nach Anspruch 16 oder 17, **dadurch gekennzeichnet, dass** die Scheinwerfer (38) jeweils ein zumindest teilweise in einem seitlichen Element (30) integriertes Gehäuse (40) aufweisen.

19. Vorderseitenmodul nach einem der Ansprüche 1 bis 18, **dadurch gekennzeichnet, dass** es zudem mindestens eine Luftabfuhrleitung (62) umfasst, die sich zumindest teilweise entlang eines seitlichen Elements (30) des zweiten Teils (20-2) erstreckt.

20. Vorderseitenmodul nach einem der Ansprüche 1 bis 19, **dadurch gekennzeichnet, dass** es zudem mindestens einen die länglichen Elemente (22) miteinander verbindenden Träger (76, 26, 78) umfasst.

21. Vorderseitenmodul nach einem der Ansprüche 1 bis 20, **dadurch gekennzeichnet, dass** der erste Teil (20-1) und/oder der zweite Teil (20-2) aus Kunststoff oder aus einem Metall-Kunststoff-Hybrid besteht.
